# EUROPEAN PATENT SPECIFICATION

(11) **EP 2 521 400 B1**
(45) Date of publication and mention of the grant of the patent: **19.08.2015**
(21) Application number: 10851640.2
(22) Date of filing: 20.09.2010
(51) Int. Cl.: H04M 1/725, H04W 48/02, H04W 84/08

(54) **METHOD AND SYSTEM FOR CONTROLLING MOBILE STATION SERVICE**
VERFAHREN UND SYSTEM ZUR STEUERUNG EINES MOBILSTATIONDIENSTES
PROCÉDÉ ET SYSTÈME POUR LE CONTRÔLE DU SERVICE D'UNE STATION MOBILE

(30) Priority: 17.05.2010 CN 201010175511
(43) Date of publication of application: 07.11.2012
(73) Proprietor: ZTE Corporation, Shenzhen, Guangdong 518057 (CN)
(72) Inventor: WANG, Shaoxing, Shenzhen Guangdong 518057 (CN); LI, Chenxi, Shenzhen Guangdong 518057 (CN); ZENG, Zhenzhuo, Shenzhen Guangdong 518057 (CN)
(74) Representative: Kling, Simone
(86) International application number: PCT/CN2010/077141
(87) International publication number: WO 2011/143883

(56) References cited:
- EP-A1- 1 895 750
- WO-A2-2005/031544
- CN-A- 101 272 381
- CN-A- 101 409 909
- US-A1- 2004 132 438
- US-A1- 2007 201 697
- US-A1- 2008 146 211

## Description

### TECHNICAL FIELD

The disclosure relates to a control technology of a mobile communication service, and in particular to a method and a system for controlling a service for a Mobile Station (MS).

### BACKGROUND

A digital cluster telecommunication system, serving as an important branch of a mobile communication system, is a mobile communication system applied to group scheduling command communication and is widely applied to intercommunication and command control of enterprises such as government administration departments, industrial and commercial enterprises, public security, railway, transportation, water conservation, energy, business, tax administration and stock certificate.

The digital cluster telecommunication system, compared with an analog cluster communication system, provides more abundant service functions. The digital cluster telecommunication system can provide professional and abundant cluster scheduling services, which include basic cluster services such as single call, group call, emergency call, broadcast call and the like, and supplementary services such as short-number dial, cluster call priority, speaking right preemption, later access, dynamic regrouping, timed call, group number display, call restriction, forced interposing and forced releasing, dynamic group management and the like. The digital cluster telecommunication system further can support an ordinary voice service, a packet data service, a short message service, a locating service and other services.

In some special occasions, for example, in a school, a parent expects to control a service for an MS used by a student in a time period during which the student is in the school, so as to prevent influence of playing a game and the like on study of the student. The service generally includes: a voice call, a short message service, surfing the Internet, camera, radio, audio playing, video playing and the like. However, in a current mobile communication system, an MS directly provides these services and a parent can not control a service for an MS used by a student.

WO 2005/031544 A2 discloses a method for allowing remote control of the usage of a networked wireless device including incoming communications, outgoing communications, and application launching, in which, controlling entities, such as parent cellular telephones or web sites, are provided with the ability to select a list of approved anytime incoming communications, or approval incoming and outgoing communications based on time and day, and the ability to reroute to the controlling entity any usage of the wireless device such as incoming communications, outgoing communications and application launching.

EP 1895750 A1 discloses a method for implementing subsystem or functional aspect restrictions on a wireless handheld communication device, in which, data defining geographical boundaries of a restricted operating area is stored on the device, the present position of the device is ascertained and a determination is made whether the device is located within the restricted operating area; a restriction on subsystem or functional aspect is imposed when it is determined the device is within the restricted operating area.

### SUMMARY

In view of the problem above, the main purpose of the disclosure is to provide a method and a system for controlling a service for a Mobile Station (MS), which are capable of realizing to control a service for an MS used by an appointed user in an appointed time period.

In order to realize the above purpose, the technical solution of the disclosure is realized as follows.

The disclosure provides a method for controlling a service for an MS, which includes:
a number of a master MS and a number of a corresponding controlled MS is registered with a system server according to a control relationship between the master MS and the controlled MS;
the master MS transmits service control information to the system server, and after receiving the service control information, the system server authenticates the master MS;
after passing the authentication, the system server transmits update information including a limited service and a time period during which the service is limited to the controlled MS; and
the controlled MS stores the update information, and when intending to start the service, in the case of determining that a current time is within the time period during which the service in the update information is limited, stops starting the service,
the authenticating the master MS may include: matching the number of the master MS and the number of the controlled MS in the service control information with the registered number of the master MS number and the registered number of the controlled MS, wherein the authentication is passed when the matching is successful.

In the above solution, that a number of a master MS and a number of a corresponding controlled MS is registered with a system server according to a control relationship between the master MS and the controlled MS may include that: a Role Control Table (RCT) is set in the system server, and the number of the master MS and the number of the corresponding controlled MS is recorded into the RCT according to the control relationship between the master MS and the controlled MS.

In the above solution, the method may further include that: a User Time Control Table (UTCT) is set in the system server, and the service limited to the controlled MS and the corresponding time period during which the service is limited to the controlled MS included in the service control information are stored in the UTCT.

In the above solution, that the controlled MS stores the update information may include that: the controlled MS stores the update information in a flash memory by overwriting previously stored update information;

in the case that the controlled MS successfully stores the update information in the flash memory, the method may further include: the controlled MS transmits an update success response to the system server, and after receiving the update success response, the system server closes the connection with the controlled MS; and

in the case that the controlled MS unsuccessfully stores the update information in the flash memory, the method may further include: the controlled MS transmits an update failure response to the system server; and the system server starts a timer and transmitting the update information to the controlled MS again after a preset time period.

In the above solution, the service control information may include: the number of the master MS, the number of the controlled MS, the limited service and the time period during which the service is limited; and
the system server may be a Push To Talk Dispatch Server (PDS) used in a digital cluster telecommunication system.

The disclosure provides a system for controlling an MS service, which includes: a master MS, a controlled MS and a system server, wherein
the master MS is configured to transmit service control information to the system server;
the system server is configured to register a number of a master MS and a number of a corresponding controlled MS according to a control relationship between the master MS and the controlled MS, after receiving the service control information, authenticate the master MS, and after passing the authentication, transmit update information including a limited service and a time period during which the service is limited to the controlled MS; and
the controlled MS is configured to store the update information, and when intending to start the service, in the case of determining that a current time is within the time period during which the service in the update information is limited, stop starting the service,
the system server) may be specifically configured to match the number of the master MS and the number of the controlled MS in the service control information with the registered number of the master MS and the registered number of the controlled MS, wherein the authentication is passed if the matching is successful.

In the above solution, the system server may be specifically configured to set an RCT, and record the number of the master MS and the number of the corresponding controlled MS into the RCT according to the control relationship between the master MS and the controlled MS through remote update of a background management system.

In the above solution, the system server may be further configured to set a UTCT and store, in the UTCT, the service limited to the controlled MS and the corresponding time period during which the service is limited to the controlled MS included in the service control information.

In the above solution, the controlled MS may be specifically configured to store the update information in a flash memory by overwriting previously stored update information;
the controlled MS may be further configured to, in the case of successfully storing the update information in the flash memory, transmit an update success response to the system server;
correspondingly, the system server may be further configured to, after receiving the update success response, close the connection with the controlled MS;
the controlled MS may be further configured to, in the case of unsuccessfully storing the update information in the flash memory, transmit an update failure response to the system server;
correspondingly, the system server may be further configured to start a timer and transmit the update information to the controlled MS again after a preset time period; and
further, the controlled MS may be further configured to, when determining that a current time is not within the time period during which the service is limited to the controlled MS included in the update information, start the service normally.

By means of the method and the system for controlling a service for an MS provided by the disclosure, a number of a master MS and a number of a corresponding controlled MS are registered with a system server according to a control relationship between the master MS and the controlled MS; the master MS transmits service control information to the system server; after receiving the service control information, the system server authenticates the master MS; after passing the authentication, the system server transmits update information including a limited service and a time period during which the service is limited to the controlled MS; and the controlled MS stores the update information, and when intending to start the service, in the case of determining that a current time is within the time period during which the service in the update information is limited, stops starting the service; in this way, controlling a service for an MS used by an appointed user in an appointed time period can be realized, and the method is flexible.

### BRIEF DESCRIPTION OF THE DRAWINGS

Fig. 1 shows a flow diagram of a method for controlling an MS service implemented by the disclosure; and
Fig. 2 shows a structure diagram of a system for controlling an MS service implemented by the disclosure.

### DETAILED DESCRIPTION

The basic idea of the disclosure includes that: a number of a master MS and a number of a corresponding controlled MS are registered with a system server according to a control relationship between the master MS and the controlled MS; the master MS transmits service control information to the system server; after receiving the service control information, the system server authenticates the master MS; after passing the authentication, the system server transmits update information including a limited service and a time period during which the service is limited to the controlled MS; and the controlled MS stores the update information, and when intending to start the service, in the case of determining that a current time is within the time period during which the service in the update information is limited, stops starting the service.

The disclosure will be further illustrated in detail in combination with the drawings and specific embodiments hereinafter.

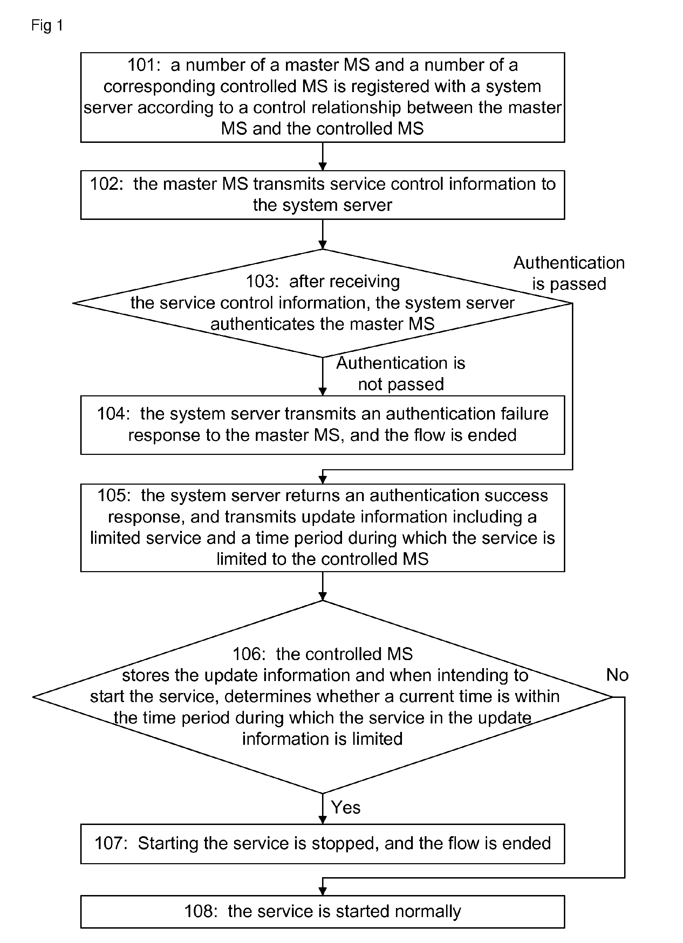

A method for controlling a service for an MS provided by the disclosure, as shown in Fig. 1, the method includes the following steps.
Step 101: a number of a master MS and a number of a corresponding controlled MS is registered with a system server according to a control relationship between the master MS and the controlled MS;
   specifically, when buying a number of an MS, the number of the master MS and the number of a corresponding controlled MS can be registered with a system server according to a control relationship between the master MS and the controlled MS through remote update of a background management system; wherein the background management system generally can be a system which is developed by adopting a B/S or C/S framework and provided with a function of updating a function of the system server;
   that a number of a master MS and a number of a corresponding controlled MS is registered with a system server according to a control relationship between the master MS and the controlled MS can generally include that: an RCT is set in the system server, and the number of the master MS and the number of the corresponding controlled MS is recorded according to the control relationship between the master MS and the controlled MS, wherein each master MS can control a plurality of MSs, that is, each master MS can control a plurality of controlled MSs; and
   the system server can be a Push To Talk Dispatch Server (PDS) and the like in a digital cluster communication system. Step 102: the master MS transmits service control information to the system server;

   specifically, the master MS edits specific service control information by a User Interface (UI) module, wherein the service control information includes: a number of an MS, a number of a controlled MS, a limited service and a time period during which the service is limited; and the limited service can be all services or a service which can be optionally controlled. The service can be represented by an identifier prescribed in advance by both the system server and the controlled MS, for example, it is prescribed that each service is represented by a corresponding natural number; and the service control information is transmitted to the system server through a Short Data Burst (SDB) message.
Step 103: after receiving the service control information, the system server authenticates the master MS, if the authentication is not passed, Step 104 is executed; if the authentication is passed, Step 105 is executed; specifically, after parsing the service control information from the received SDB message, the system server matches the number of the master MS and the number of the controlled MS in the service control information with the registered number of the master MS and the registered number of the controlled MS, if there are not matched numbers, the authentication fails and then Step 104 is executed; if there are matched numbers, the matching succeeds and the authentication is passed, and then Step 105 is executed.
Step 104: the system server transmits an authentication failure response to the master MS; and the flow is ended.
Step 105: the system server returns an authentication success response, and transmits update information including a limited service and a time period during which the service is limited to the controlled MS;
   specifically, the system server returns the authentication success response to the master MS and establishes a connection with the controlled MS through a call request, and after the connection is established successfully, the system server transmits the update information to the controlled MS through an SDB message;
   further, the system server stores the service control information; specifically, a UTCT is set in the system server, and the service limited to the controlled MS and the corresponding time period during which the service is limited to the controlled MS included in the service control information are stored in the UTCT. Step 106: the controlled MS stores the update information, and when intending to start the service, determines whether a current time is within the time period during which the service in the update information is limited, if yes, Step 107 is executed; otherwise, Step 108 is executed;

   specifically, the controlled MS parses the update information in the SDB message, and stores the obtained update information in a flash memory according to a mode of updating, wherein the mode of updating refers to overwriting previously stored update information by the obtained update information; when the controlled MS starts a service, the controlled MS searches in the stored update information whether there is a time period during which the service is limited, if not, the controlled MS starts the service normally; otherwise, the controlled MS extracts a current time of a system and determines whether the current time is within a time period during which the service is limited in the update information, if yes, Step 107 is executed; otherwise, Step 108 is executed;
   further, the controlled MS stores the obtained update information in a memory and searches in the service control information stored in the memory whether there is a time period during which the service required to be started is limited, so as to prevent reading the flash memory for many times;
   further, in the case of successfully storing the obtained update information in the flash memory, the controlled MS transmits an update success response to the system server, and after receiving the update success response, the system server closes the connection with the controlled MS; and
   further, in the case of unsuccessfully storing the obtained update information in the flash memory, the controlled MS transmits an update failure response to the system server, and the system server starts a timer and transmits the update information to the controlled MS through an SDB message again after a preset time period; and Step 106 is executed.
Step 107: starting the service is stopped; and the flow is ended.
Step 108: the service is started normally.

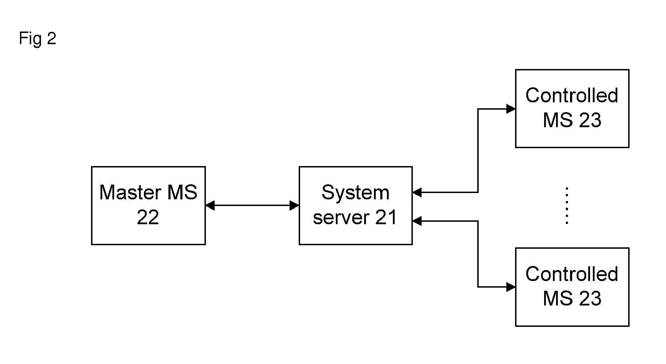

In order to realize the above method, the disclosure further provides a system for controlling a service for an MS, and as shown in Fig. 2, the system includes: MSs and a system server 21, wherein the MSs can be divided into a master MS 22 for controlling other MSs and a controlled MS 23 to be controlled; and each master MS 22 can control a plurality of controlled MSs;
the master MS 22 is configured to transmit service control information to the system server 21; wherein the service control information includes a number of the master MS 22, a number of the controlled MS 23, a limited service and a time period during which the service is limited;
the system server 21 is configured to register the number of the master MS 22 and the number of the corresponding controlled MS 23 according to a control relationship between the master MS and the controlled MS, after receiving the service control information, authenticate the master MS 22, and after passing the authentication, transmit update information including a limited service and a time period during which the service is limited to the controlled MS 23; and
the controlled MS 23 is configured to store the update information, and when intending to start the service, in the case of determining that a current time is within the time period during which the service in the update information is limited, stop starting the service.

The system server 21 is configured to register the number of the master MS 22 and the number of the corresponding controlled MS 23 according to a control relationship between the master MS and the controlled MS; specifically, the system server 21 sets a RCT and records the number of the master MS 22 and the number of the corresponding controlled MS 23 into the RCT according to the control relationship between the master MS and the controlled MS through remote update of a background management system;
the system server 21 is further configured to store the service control information; specifically, the system server 21 sets a UTCT, and stores, in the UTCT, the service limited to the controlled MS 23 and the corresponding time period during which the service is limited to the controlled MS 23 included in the service control information; and
the system server 21 is further configured to, in the case of unsuccessfully passing the authentication, transmit an authentication failure response to the master MS 22 and end an operation.

The controlled MS 23 stores the update information; specifically, the controlled MS 23 stores the update information in a flash memory by overwriting the previously stored update information;
the controlled MS 23 is further configured to, in the case of successfully storing the update information in the flash memory, transmit an update success response to the system server 21;
correspondingly, the system server 21 is further configured to, after receiving the update success response, close a connection with the controlled MS 23;
the controlled MS 23 is further configured to, in the case of unsuccessfully storing the update information in the flash memory, transmit an update failure response to the system server 21;
correspondingly, the system server 21 is further configured to start a timer and transmit the update information to the controlled MS 23 again after a preset time period;
further, the controlled MS 23 is further configured to, when determining that the current time is not within the time period during which the service is limited in the update information, start the service normally; and
further, the controlled MS 23 stores the update information in the memory by updating and searches in the service control information stored in the memory whether there is a time period during which the service required to be started is limited.

Both the service control information and the update information above are transmitted through an existing SDB message.

By means of the method provided by the disclosure, a number of a master MS and a number of a corresponding controlled MS are registered with a system server according to a control relationship between the master MS and the controlled MS, after passing an authentication for the master MS, the system server transmits update information including a limited service and a time period during which the service is limited to the controlled MS, and the controlled MS accepts a control according to the update information; in this way, controlling a service for an MS used by an appointed user in an appointed time period can be realized and the method is flexible.

The above are only the preferred embodiments of the disclosure and not intended to limit the scope of protection of the disclosure.

## Claims

1. A method for controlling a service for a Mobile Station (MS), **characterized in that** the method comprises:
registering (101) with a system server, a number of a master MS and a number of a corresponding controlled MS according to a control relationship between the master MS and the controlled MS;
transmitting (102), by the master MS, service control information to the system server, and after receiving the service control information, authenticating (103), by the system server, the master MS;
after passing the authentication, transmitting (105), by the system server, update information including a limited service and a time period during which the service is limited to the controlled MS ; and
storing (106-107), by the controlled MS, the update information, and when intending to start the service, in the case of determining that a current time is within the time period during which the service in the update information is limited, stopping starting the service,
wherein the authenticating the master MS comprises: matching the number of the master MS and the number of the controlled MS in the service control information with the registered number of the master MS and the registered number of the controlled MS, wherein the authentication is passed if the matching is successful.

2. The method according to claim 1, wherein the registering with a system server, a number of a master MS and a number of a corresponding controlled MS according to a control relationship between the master MS and the controlled MS comprises: setting a Role Control Table (RCT) in the system server, and recording the number of the master MS and the number of the corresponding controlled MS into the RCT according to the control relationship between the master MS and the controlled MS.

3. The method according to claim 1, further comprising: setting a User Time Control Table (UTCT) in the system server, and storing, in the UTCT, the service limited to the controlled MS and the corresponding time period during which the service is limited to the controlled MS included in the service control information.

4. The method according to claim 1, wherein the step of storing the update information by the controlled MS comprises: storing the update information, by the controlled MS, in a flash memory by overwriting previously stored update information;
in the case of successfully storing the update information by the controlled MS in the flash memory, the method further comprises: transmitting, by the controlled MS, an update success response to the system server, and after receiving the update success response, closing, by the system server, the connection with the controlled MS; and
in the case of unsuccessfully storing the update information by the controlled MS in the flash memory, the method further comprises: transmitting, by the controlled MS, an update failure response to the system server; and starting, by the system server, a timer and transmitting the update information to the controlled MS again after a preset time period.

5. The method according to any one of claims 1 to 4, wherein the service control information comprises: the number of the master MS, the number of the controlled MS, the limited service and the time period during which the service is limited; and
the system server is a Push To Talk Dispatch Server (PDS) used in a digital cluster telecommunication system.

6. A system for controlling an MS service, **characterized in that** the system comprises: a master MS, a controlled MS and a system server, wherein
the master MS (22) is configured to transmit service control information to the system server;
the system server (21) is configured to register a number of a master MS and a number of a corresponding controlled MS according to a control relationship between the master MS and the controlled MS, after receiving the service control information, authenticate the master MS, and after passing the authentication, transmit update information including a limited service and a time period during which the service is limited to the controlled MS; and
the controlled MS (23) is configured to store the update information, and when intending to start the service, in the case of determining that a current time is within the time period during which the service in the update information is limited, stop starting the service,
wherein the system server (21) is specifically configured to match the number of the master MS and the number of the controlled MS in the service control information with the registered number of the master MS and the registered number of the controlled MS, wherein the authentication is passed if the matching is successful.

7. The system according to claim 6, wherein the system server is specifically configured to set an RCT and record the number of the master MS and the number of the corresponding controlled MS into the RCT according to the control relationship between the master MS and the controlled MS through remote update of a background management system.

8. The system according to claim 6, wherein the system server is further configured to set a UTCT and store, in the UTCT, the service limited to the controlled MS and the corresponding time period during which the service is limited to the controlled MS included in the service control information.

9. The system according to claim 6, wherein the controlled MS is specifically configured to store the update information in a flash memory by overwriting previously stored update information;
the controlled MS is further configured to, in the case of successfully storing the update information in the flash memory, transmit an update success response to the system server;
correspondingly, the system server is further configured to, after receiving the update success response, close the connection with the controlled MS;
the controlled MS is further configured to, in the case of unsuccessfully storing the update information in the flash memory, transmit an update failure response to the system server;
correspondingly, the system server is further configured to start a timer and transmit the update information to the controlled MS again after a preset time period; and
further, the controlled MS is further configured to, when determining that a current time is not within the time period during which the service is limited to the controlled MS of the update information, start the service normally.

## Patentansprüche

1. Verfahren zur Steuerung eines Dienstes für eine Mobilstation (MS), **dadurch gekennzeichnet, dass** das Verfahren umfasst:
Registrieren (101) mit einem System-Server, einer Nummer einer Master-MS und einer Nummer einer entsprechenden gesteuerten MS gemäß einer Steuerbeziehung zwischen der Master-MS und der gesteuerten MS;
Übertragen (102), durch die Master-MS, von Dienst-Steuerinformation an den System-Server, und, nach Erhalt der Dienst-Steuerinformation, Authentifizieren (103) durch den System-Server, der Master-MS ;
nach dem Durchlaufen der Authentifizierung, Übertragen (105), durch den System-Server, der aktualisieren Information, darin eingeschlossen einen begrenzten Dienst und einen Zeitraum, während dessen der Dienst auf die gesteuerte MS begrenzt ist: und
Speichern (106 - 107), durch die gesteuerte MS, der aktualisierten Information, und wenn versucht wird, den Dienst zu starten, für den Fall des Bestimmens, dass eine aktuelle Zeit im Zeitraum liegt, während dessen der Dienst in der aktualisierten Information begrenzt ist, Stoppen des Starts des Dienstes,
wobei das Authentifizieren der Master-MS Folgendes umfasst: Anpassen der Nummer der Master-MS und der Nummer der gesteuerten MS in der Dienst-Steuerinformation an die registrierte Nummer des Master-MS und die registrierte Nummer der gesteuerten MS, wobei die Authentifizierung durchlaufen wird, wenn die Anpassung erfolgreich ist.

2. Verfahren nach Anspruch 1, wobei das Registrieren, mit einem System-Server, einer Nummer einer Master-MS und einer Nummer einer entsprechenden gesteuerten MS gemäß einer Steuerbeziehung zwischen der Master-MS und der gesteuerten MS Folgendes umfasst: Einstellen einer Rollensteuertabelle (RCT) im System-Server und Aufzeichnen der Nummer der Master-MS und der Nummer der entsprechenden gesteuerten MS in die RCT gemäß der Steuerbeziehung zwischen der Master-MS und der gesteuerten MS.

3. Verfahren nach Anspruch 1, weiter umfassend: Einstellen einer User Time Control Table (UTCT) im System-Server und Speichern, in der UTCT, des Dienstes, der auf die gesteuerte MS beschränkt ist, und des entsprechenden Zeitraums, während dessen der Dienst auf die gesteuerte MS beschränkt ist, enthalten in der Dienststeuerinformation.

4. Verfahren nach Anspruch 1, wobei der Schritt des Speicherns der aktualisierten Information durch die gesteuerte MS folgendes umfasst: Speichern der aktualisierten Information, durch die gesteuerte MS, in einem Flash-Speicher durch Überschreiben von zuvor gespeicherter aktualisierter Information;
für den Fall des erfolgreichen Speicherns der aktualisierten Information durch die gesteuerte MS im Flash-Speicher umfasst das Verfahren weiter Folgendes: Übertragen, durch die gesteuerte MS, eines aktualisierten Erfolgsreaktion an den System-Server, und nach dem Erhalten der Erfolgsreaktion, Schließen, durch den System-Server, der Verbindung mit der gesteuerten MS; und
für den Fall des nicht erfolgreichen Speicherns der aktualisierten Information, durch die gesteuerte MS, in den Flash-Speicher umfasst das Verfahren weiter Folgendes: Übertragen, durch die gesteuerte MS, einer aktualisierten Fehlerreaktion an den System-Server; und Starten, durch den System-Server, eines Zeitmessers und erneutes Übertragen der aktualisierten Information an die gesteuerte MS nach einem voreingestellten Zeitraum.

5. Verfahren nach einem der Ansprüche 1 bis 4, wobei die Dienst-Steuerinformation Folgendes umfasst: die Nummer der Master-MS, die Nummer der gesteuerten MS, den begrenzten Dienst und den Zeitraum, während dessen der Dienst begrenzt ist; und
der System-Server ein Push To Talk Dispatch Server (PDS) ist, der in einem Digital Cluster-Telekommunikationssystem verwendet wird.

6. System zur Steuerung eines MS-Dienstes, **dadurch gekennzeichnet, dass** das System Folgendes umfasst: eine Master-MS, eine gesteuerte MS und einen System-Server, wobei
die Master-MS (22) konfiguriert ist, um die Dienst-Steuerinformation an den System-Server zu übertragen;
der System-Server (21) konfiguriert ist, um eine Nummer einer Master-MS und eine Nummer einer entsprechenden gesteuerten MS gemäß eine Steuerbeziehung zwischen der Master-MS und der gesteuerten MS nach dem Erhalt der Dienststeuerinformation zu registrieren, die Master-MS zu authentifizieren und, nach dem Durchlaufen der Authentifizierung, die aktualisierte Information darin eingeschlossen einen begrenzten Dienst und einen Zeitraum, während dessen der Dienst begrenzt ist, an die gesteuerte MS zu übertragen; und
die gesteuerte MS (23) konfiguriert ist, um die aktualisierte Information zu speichern, und wenn versucht wird, den Dienst zu starten, für den Fall des Bestimmens, dass eine laufende Zeit innerhalb des Zeitraums liegt, während dessen der Dienst in der aktualisierten Information begrenzt ist, Stoppen des Starts des Dienstes,
wobei der System-Server (21) spezifisch konfiguriert ist, um die Nummer der Master-MS und die Nummer der gesteuerten MS, in der Dienst-Steuerinformation an die registrierte Nummer der Master-MS und die registrierte Nummer der gesteuerten MS anzupassen, wobei die Authentifizierung durchlaufen wird, wenn die Anpassung erfolgreich ist.

7. System nach Anspruch 6, wobei der System-Server spezifisch konfiguriert ist, um eine RCT einzustellen und die Nummer der Master-MS und die Nummer der entsprechenden gesteuerten MS in die RCT gemäß der Steuerbeziehung zwischen der Master-MS und der gesteuerten MS durch die ferngesteuerte Aktualisierung eines Hintergrund-Managementsystems aufzuzeichnen.

8. System nach Anspruch 6, wobei der System-Server weiter konfiguriert ist, um eine UTCT einzustellen und in der UTCT den Dienst zu speichern, der auf die gesteuerte MS beschränkt ist, sowie den entsprechenden Zeitraum, während dessen der Dienst auf die gesteuerte MS beschränkt ist, die in der Dienst-Steuerinformation enthalten ist.

9. System nach Anspruch 6, wobei die gesteuerte MS spezifisch konfiguriert ist, um die aktualisierte Information in einen Flash-Speicher durch das Überschreiben der zuvor gespeicherten aktualisierten Information zu speichern;
die gesteuerte MS weiter konfiguriert ist, um, für den Fall der erfolgreichen Speicherung der aktualisierten Information im Flash-Speicher, eine aktualisierte Erfolgsreaktion an den System-Server zu übertragen;
folglich ist der System-Server weiter konfiguriert, um, nach dem Erhalt der aktualisierten Erfolgsreaktion, die Verbindung mit der gesteuerten MS zu schließen;
die gesteuerte MS ist weiter konfiguriert, um, für den Fall der nicht erfolgreichen Speicherung der aktualisierten Information im Flash-Speicher, eine aktualisierte Fehlerreaktion an den System-Server zu übertragen;
folglich ist der System-Server weiter konfiguriert, um einen Zeitmesser zu starten und die aktualisierte Information an die gesteuerten MS nach einem voreingestellten Zeitraum erneut zu übertragen; und
die gesteuerte MS ist weiter konfiguriert, um, bei der Bestimmung, dass eine laufende Zeit nicht im Zeitraum liegt, während dessen der Dienst auf die gesteuerte MS der aktualisierten Information beschränkt ist, den Dienst normal zu starten.

## Revendications

1. Procédé de commande d'un service pour une station mobile (MS), **caractérisé en ce que** le procédé comprend les étapes ci-dessous consistant à :
enregistrer (101), auprès d'un serveur de système, un numéro d'une station MS maîtresse et un numéro d'une station MS commandée correspondante, selon une relation de commande entre la station MS maîtresse et la station MS commandée ;
transmettre (102), par le biais de la station MS maîtresse, des informations de commande de service, au serveur de système, et après avoir reçu les informations de commande de service, authentifier (103), par le biais du serveur de système, la station MS maîtresse ;
une fois l'authentification réussie, transmettre (105), par le biais du serveur de système, des informations de mise à jour incluant un service limité et une période de temps au cours de laquelle le service est limité pour la station MS commandée ; et
stocker (106-107), par le biais de la station MS commandée, les informations de mise à jour, et lors d'une intention de démarrer le service, dans le cas où il a été déterminé qu'un instant en cours est situé dans la période de temps au cours de laquelle le service dans les informations de mise à jour est limité, interrompre le démarrage du service ;
dans lequel l'authentification de la station MS maîtresse consiste à : mettre en correspondance le numéro de la station MS maîtresse et le numéro de la station MS commandée dans les informations de commande de service, avec le numéro enregistré de la station MS maîtresse et le numéro enregistré de la station MS commandée, dans lequel l'authentification est réussie si la mise en correspondance est réussie.

2. Procédé selon la revendication 1, dans lequel l'enregistrement auprès d'un serveur de système, d'un numéro d'une station MS maîtresse et d'un numéro d'une station MS commandée correspondante selon une relation de commande entre la station MS maîtresse et la station MS commandée consiste à : définir une table de contrôle de rôles (RCT) dans le serveur de système, et enregistrer le numéro de la station MS maîtresse et le numéro de la station MS commandée correspondante dans la table RCT selon la relation de commande entre la station MS maîtresse et la station MS commandée.

3. Procédé selon la revendication 1, comprenant en outre l'étape consistant à : définir une table de contrôle de temps d'utilisateur (UTCT) dans le serveur de système, et stocker, dans la table UTCT, le service limité pour la station MS commandée et la période de temps correspondante au cours de laquelle le service est limité pour la station MS commandée, inclus dans les informations de commande de service.

4. Procédé selon la revendication 1, dans lequel l'étape consistant à stocker les informations de mise à jour, par le biais de la station MS commandée, comprend les étapes consistant à : stocker les informations de mise à jour, par le biais de la station MS commandée, dans une mémoire flash, en écrasant les informations de mise à jour stockées précédemment ;
dans le cas de la réussite du stockage des informations de mise à jour, par la station MS commandée, dans la mémoire flash, le procédé comprend en outre les étapes consistant à : transmettre, par le biais de la station MS commandée, une réponse de réussite de mise à jour au serveur de système, et après avoir reçu la réponse de réussite de mise à jour, fermer, par le biais du serveur de système, la connexion avec la station MS commandée ; et
dans le cas de l'échec du stockage des informations de mise à jour, par la station MS commandée, dans la mémoire flash, le procédé comprend en outre les étapes consistant à : transmettre, par le biais de la station MS commandée, une réponse d'échec de mise à jour, au serveur de système ; et démarrer, par le serveur de système, un temporisateur, et transmettre les informations de mise à jour à la station MS commandée à nouveau après une période de temps prédéfinie.

5. Procédé selon l'une quelconque des revendications 1 à 4, dans lequel les informations de commande de service comportent : le numéro de la station MS maîtresse, le numéro de la station MS commandée, le service limité et la période de temps au cours de laquelle le service est limité ; et
le serveur de système est un serveur de distribution de messagerie vocale instantanée (PDS) utilisé dans un système de télécommunication en grappes numérique.

6. Système destiné à commander un service de station MS, **caractérisé en ce que** le système comprend : une station MS maîtresse, une station MS commandée et un serveur de système, dans lequel
la station MS maîtresse (22) est configurée de manière à transmettre des informations de commande de service au serveur de système ;
le serveur de système (21) est configuré de manière à enregistrer un numéro d'une station MS maîtresse et un numéro d'une station MS commandée correspondante, selon une relation de commande entre la station MS maîtresse et la station MS commandée, après avoir reçu les informations de commande de service, authentifier la station MS maîtresse, et une fois l'authentification réussie, transmettre des informations de mise à jour incluant un service limité et une période de temps au cours de laquelle le service est limité pour la station MS commandée ; et
la station MS commandée (23) est configurée de manière à stocker les informations de mise à jour, et lors d'une intention de démarrer le service, dans le cas où il a été déterminé qu'un instant en cours est situé dans la période de temps au cours de laquelle le service dans les informations de mise à jour est limité, interrompre le démarrage du service ;
dans lequel le serveur de système (21) est spécifiquement configuré de manière à mettre en correspondance le numéro de la station MS maîtresse et le numéro de la station MS commandée dans les informations de commande de service, avec le numéro enregistré de la station MS maîtresse et le numéro enregistré de la station MS commandée, dans lequel l'authentification est réussie si la mise en correspondance est réussie.

7. Système selon la revendication 6, dans lequel le serveur de système est spécifiquement configuré de manière à définir une table RCT et à enregistrer le numéro de la station MS maîtresse et le numéro de la station MS commandée correspondante dans la table RCT, selon la relation de commande entre la station MS maîtresse et la station MS commandée, à travers une mise à jour à distance d'un système de gestion d'arrière-plan.

8. Système selon la revendication 6, dans lequel le serveur de système est en outre configuré de manière à définir une table UTCT et à stocker, dans la table UTCT, le service limité pour la station MS commandée et la période de temps correspondante au cours de laquelle le service est limité pour la station MS commandée, inclus dans les informations de commande de service.

9. Système selon la revendication 6, dans lequel la station MS commandée est spécifiquement configurée de manière à stocker les informations de mise à jour dans une mémoire flash, en écrasant les informations de mise à jour stockées précédemment ;
la station MS commandée est en outre configurée de manière à, dans le cas de la réussite du stockage des informations de mise à jour dans la mémoire flash, transmettre une réponse de réussite de mise à jour au serveur de système ;
de manière correspondante, le serveur de système est en outre configuré de manière à, après avoir reçu la réponse de réussite de mise à jour, fermer la connexion avec la station MS commandée ;
la station MS commandée est en outre configurée de manière à, dans le cas de l'échec du stockage des informations de mise à jour dans la mémoire flash, transmettre une réponse d'échec de mise à jour au serveur de système ;
de manière correspondante, le serveur de système est en outre configuré de manière à démarrer un temporisateur, et à transmettre les informations de mise à jour à la station MS commandée à nouveau après une période de temps prédéfinie ; et
en outre, la station MS commandée est configurée de manière à, lorsqu'il a été déterminé qu'un instant en cours n'est pas situé dans la période de temps au cours de laquelle le service est limité pour la station MS commandée pour les informations de mise à jour, démarrer le service normalement.
